# EUROPEAN PATENT SPECIFICATION

(11) **EP 1 349 156 B1**
(45) Date of publication and mention of the grant of the patent: **02.05.2007**
(21) Application number: 03006838.1
(22) Date of filing: 27.03.2003
(51) Int. Cl.: G11B 7/085, G11B 19/02, G11B 21/02, G11B 19/20

(54) **Structure for mounting a motor on a base**
Bauteil zur Befestigung eines Motors auf einem Boden
Structure pour la fixation d'un moteur sur une base

(30) Priority: 28.03.2002 JP 2002090903
(43) Date of publication of application: 01.10.2003
(73) Proprietor: Mitsumi Electric Co., Ltd., Tama-Shi, Tokyo (JP)
(72) Inventor: Kurosaka, Toshinori, Yamagata-shi, Yamagata (JP); Watanabe, Takashi, Yamagata-shi, Yamagata (JP); Takahashi, Mamoru, Yamagata-shi, Yamagata (JP); Sato, Makoto, Yamagata-shi, Yamagata (JP)
(74) Representative: Patentanwälte Dr. Solf & Zapf

(56) References cited:
- PATENT ABSTRACTS OF JAPAN vol. 1997, no. 01, 31 January 1997 (1997-01-31) & JP 8 249808 A (SANYO ELECTRIC CO LTD), 27 September 1996 (1996-09-27)
- PATENT ABSTRACTS OF JAPAN vol. 2002, no. 03, 3 April 2002 (2002-04-03) & JP 2001 314058 A (NIPPON DENSAN CORP), 9 November 2001 (2001-11-09)

## Description

### BACKGROUND OF THE INVENTION

### Field of the Invention

The present invention is related to a mounting structure for mounting a motor to a mounting base, and more specifically to a mounting structure for mounting a motor for rotating a disc-shaped recording medium such as an optical disc or the like used in an information recording/playback apparatus to a mounting base such as a chassis in the apparatus.

### Description of the Prior Art

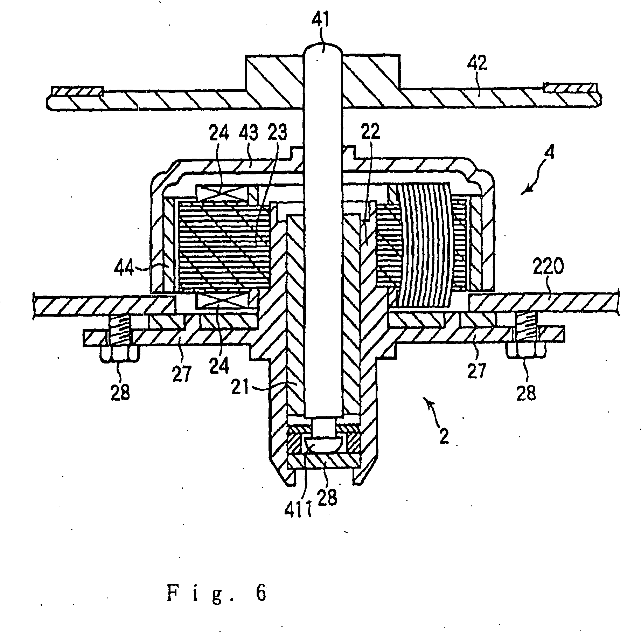

As shown in Fig. 6, a prior art spindle motor for rotating an optical disc such as a compact disc (CD) or the like used in a disc drive or the like is constructed from a stator 2 and a rotor 4, and the spindle motor is mounted to a feed chassis 220 which functions as a mounting base.

The stator 2 is generally composed from a motor mounting base 27 used as a base for mounting the spindle motor, a bearing support portion 22 which is integrally formed on the motor mounting base 27, a slide bearing 21 which rotatably supports a rotation shaft 41, and a stator core 23 around which wires 24 are wound, and the like. The motor mounting base 27 is fixed to the feed chassis 220 from the bottom of the feed chassis 220 by screws 28.

Further, the rotor 4 is constructed from the rotation shaft 41 provided with a turntable 42, a yoke 43, and permanent magnets 44 and the like.

A bottom cover 28 is fixed to the bottom portion of the bearing support portion 22 of the motor mounting base 27 of the stator 2 so that the downward movement of the rotor 4 is restricted by the contact of a tip end 411 of the rotation shaft 41 with the cover 28.

However, the prior art spindle motor for rotating an optical disc having the above structure involves the following problems.

Namely, because the stator 2 is a complex structure equipped with the motor mounting base 27 and the bearing support portion 22, a plurality of components are required in order to manufacture the stator 2. Consequently, because the number of components is increased, the cost of manufacturing a spindle motor becomes unavoidably higher.

JP-A-08-249808 discloses the preamble of claim 1.

### SUMMARY OF THE INVENTION

In view of the problem of the prior art described above, it is an object of the present invention to provide a mounting structure for mounting a motor to a mounting base, wherein the structure of the stator is simplified. and the number of components is reduced to lower the cost of the spindle motor.

In order to achieve the object, the present invention is directed to a mounting structure of a motor to a mounting base, in which the motor includes a rotor having a rotation shaft for rotating a disc-shaped recording medium and a stator having a bearing portion for rotatably supporting the rotation shaft. The mounting base is provided with a shaft end receiving portion for restricting the movement of the rotation shaft in at least one direction of the axial directions of the rotation shaft.

In the present invention, it is preferred that the shaft end receiving portion restricts the downward movement of the rotation shaft, and includes a concave part integrally formed with the mounting base.

Further, it is also preferred that the shaft end receiving portion is formed from a metallic material.

Furthermore, it is also preferred, that the shaft end receiving portion is formed by means of drawing.

Moreover, it is also preferred that the mounting base is a feed chassis in an optical disc drive which includes an optical pick-up at least for playing back an optical disc, and which is constructed so that a portion of the feed chassis on which the pick-up is provided is displaceable between a raised position and a lowered position, and the motor is a spindle motor provided on the chassis for rotating the optical disc.

The above and other objects, structures and advantages of the present invention will be more apparent when the following detailed description of the embodiments is considered in conjunction with the accompanied drawings.

### BRIEF DESCRIPTION OF THE DRAWINGS

Fig. 1 is a cross-sectional view which shows one embodiment of a mounting structure for mounting a motor to a mounting base according to the present invention.
Fig. 2 is a top view of a slide bearing of the motor.
Fig. 3 is a perspective view which shows the overall structure of a disc drive equipped with the mounting structure according to the present invention.
Fig. 4 is an exploded perspective view of the disc drive shown in Fig. 3.
Fig. 5 is a perspective view which shows the structure of another embodiment of the present invention, in which a shaft end receiving portion prepared separately from the mounting base is attached to the mounting base.
Fig. 6 is a cross sectional view which shows the mounting structure for mounting a prior art motor to a mounting base.

### DETAILED DESCRIPTION OF THE PREFERRED EMBODIMENTS

The preferred embodiments of the present invention will now be described in detail with reference to the appended drawings.

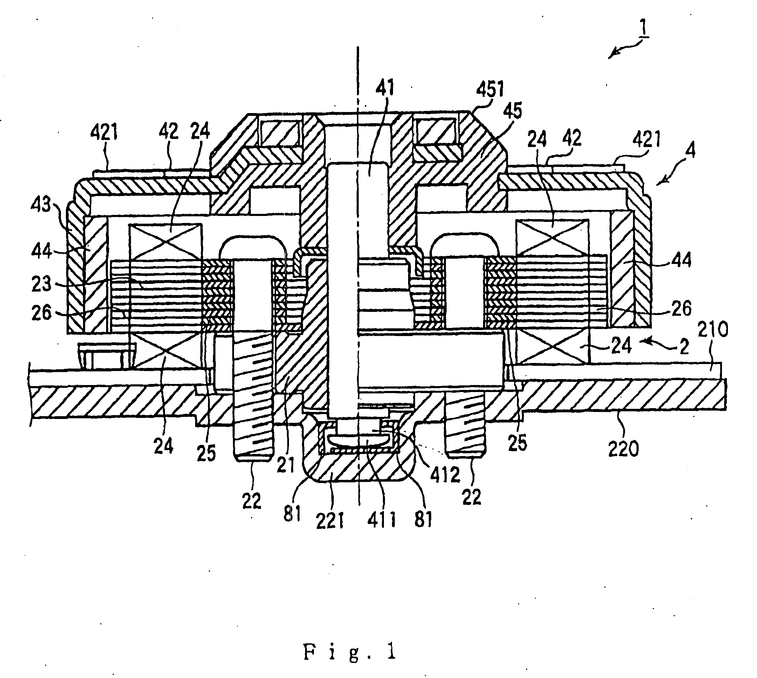

Fig. 1 shows a first embodiment of a mounting structure for mounting a motor to a mounting base according to the present invention.

The spindle motor 1 shown in Fig. 1 is an outer rotor type brushless motor (brushless DC motor) for rotating an optical disc such as a compact disc (CD), a CD-ROM, a CD-R or the like, for example. Further, a feed chassis 220 shown in Fig. 1 is one example of a mounting base.

The motor 1 shown in Fig, 1 is generally composed from a rotor 4, and a stator 2 equipped with a bearing portion for rotatably supporting the rotor 4.

The stator 2 is constructed from a slide bearing 21, bearing fixing bolts 22 for mounting the slide bearing 21 to the feed chassis 220 in a fixed state, and a stator core 23 provided with coils 24, and the like. The slide bearing 21 rotatably supports a rotation shaft 41 of the rotor 4. In this example, the bearing fixing bolts 22 and the slide bearing 21 constitute a bearing portion which rotatably supports the rotation shaft 41.

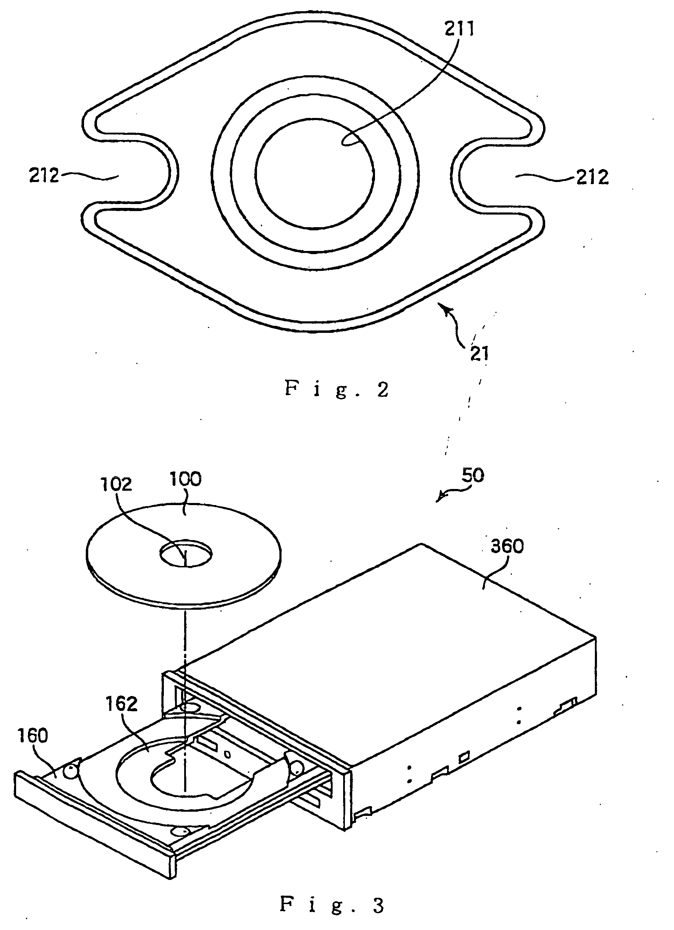

As shown in Fig. 2, an insertion hole 211 through which the rotation shaft 41 is inserted, and two insertion holes 212 through which the bearing fixing bolts 22 are respectively inserted are formed in the slide bearing 21. The slide bearing 21 is mounted in a fixed state to the feed chassis 220 by inserting the bearing fixing bolts 22 through the insertion holes 212, respectively, and then fastening the bearing fixing bolts 22 to the feed chassis 220 by nuts, for example.

The stator core 23 has an annular portion 25 in the center portion thereof, and by fitting the bearing fixing bolts 22 into holes formed in the annular portion 25, the stator core 23 is fixed with respect to the feed chassis 220 through the bearing fixing bolts 22 and the slid bearing 21. Nine magnetic poles 26 are formed on the annular portion 25 radially at equal angular spacings in the circumferential direction. Wires are wound around these magnetic poles 26 to form the coils 24.

The rotor 4 is roughly constructed from the rotation shaft 41, a shaft coupling portion 45 into which one end (the top end in the example shown in Fig. 1) of the rotation shaft 41 is inserted and fixed thereto, a roughly cup-shaped yoke 43 fixedly mounted on the shaft coupling portion 45, permanent magnets 44 provided on the inner circumferential surface of the yoke 43, and a disc-shaped turntable 42 provided on the yoke 43, and the like. A convex portion 451 for positioning an optical disc placed on the turntable 42 is formed on the shaft attaching portion 45. An optical disc is placed on the turntable 42 in a state that the convex portion 451 is inserted through a hole (the center hole 102 shown in Fig. 3 described later) formed in the center of the optical disc.

In this way, because the turntable 42 is provided on the top of the yoke 43, when the yoke 43 is rotated, the turntable 42 is also rotated at the same time.

At the time an optical disc is loaded, the turntable 42 can hold the optical disc in cooperation with a clamp member (not shown in the drawing) by the attractive force of a magnet or the like, for example, and at the time of ejection, the turntable 42 is lowered so as to be able to release the optical disc. Further, an antislip pad 421 is provided on an upper peripheral portion of the turntable 42 to prevent the optical disc from slipping.

The bottom end of the rotation shaft 41 is formed into a convex rounded shaft tip portion 411. Further, a shaft groove 412 is formed adjacent to the shaft tip portion 411. The shaft groove 412 is formed by cutting away a peripheral portion of the rotation shaft 41 to form an annular groove.

Hereinbelow, a description will now be given for the structure of the feed chassis 220 on which the motor 1 shown in Fig. 1 is mounted. The feed chassis 220 is used as a mounting base of the present invention. The feed chassis 220 is formed from a metal plate material. A shaft end receiving portion 221 is formed in the feed chassis 220 at a position where the motor 1 is to be mounted. The shaft end receiving portion 221 is formed by carrying out a drawing process to a part of the feed chassis in a die so that the part of the feed chassis undergoes plastic deformation to form a concave depression in the feed chassis 220, whereby the shaft end receiving portion 221 is integrally formed on the feed chassis 220. In this way, the movement of the rotation shaft 41 of the rotor 4 in one direction (the downward direction in Fig. 1) is restricted by the contact of the shaft tip portion 411 with the shaft end receiving portion 221. Further, in the drawings, the reference number 210 is a printed circuit board having a circuit for supplying a driving electric current and control signals to the motor 1.

Next, a description will be given for an example of a disc drive equipped with the mounting structure for mounting a motor to a mounting base according to the present invention which include the motor 1 and the feed chassis 220.

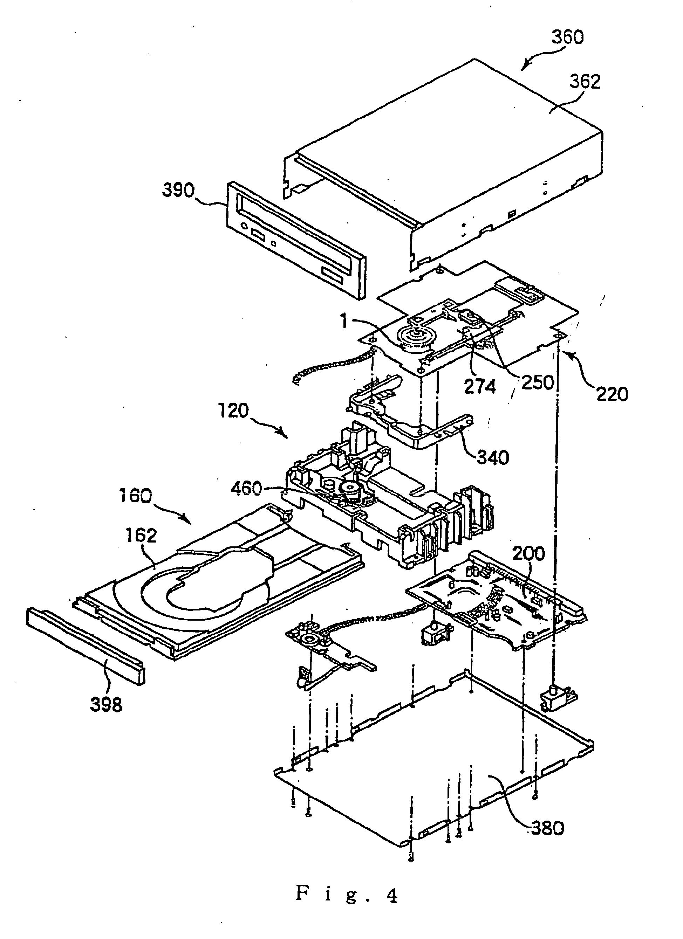

Fig. 3 is a perspective view which shows the overall structure of a disc drive equipped with the feed chassis 220 on which the motor 1 shown in Fig. 1 is mounted. Fig. 4 is an exploded perspective view of the disc drive shown in Fig. 3.

As shown in Fig. 3 and Fig. 4, the disc drive 50 is an apparatus for carrying out recording and/or playback of a disc 100 such as a CD-ROM, a music CD, a DVD or the like. The disc drive is generally composed from a loading chassis 120, a disc tray 160 for conveying a disc, a main circuit board 200 arranged in the rear bottom portion of the loading chassis 120, the feed chassis 220, a pivotal frame 340, a loading cam mechanism 460 which operates the pivotal frame 340 and the disc tray 160 provided on the loading chassis 120, and a casing 360 which houses all these components.

In more details, the casing 360 is constructed from a bottom cover 380 which covers the bottom of the disc apparatus 50, an outer cover 362 which covers the top, the left and right sides and the back of the disc drive 50, and a front panel 390 which covers the front of the disc drive 50.

The disc tray 160 has a disc supporting portion 162 in which a disc 100 is to be placed. The disc tray 160 is movable in the forward and backward directions with respect to the loading chassis 120 between a disc ejection position and a disc playback position to convey the disc 100.

The motor 1 is mounted on the feed chassis 220. The feed chassis 220 is equipped with an optical pick-up 250 for carrying out recording or playback of the disc 100, and an optical pick-up moving mechanism 274 provided with a sliding mechanism which moves the optical pick-up 250 in a radial direction of the disc 100.

The pivotal frame 340 is a member for pivotally displacing the feed chassis 220 between a raised position (a position which makes it possible to carry out playback or recording of the disc 100) and a lowered position (a position for evacuating the feed chassis 220 when carrying out loading/ejecting operation of the disc 100). The disc drive 50 includes a loading mechanism for pivotally displacing the feed chassis 220 so that the feed chassis 220 is positioned at the raised position when the disc tray 160 is at the disc playback position, and the feed chassis 220 is positioned at the lowered position when the disc tray 160 is at the disc ejection position.

Hereinbelow, a description will be given for the mounting process at the time the motor 1 is mounted to the feed chassis 220. First, a brace 81 is placed in the depressed portion (concave portion) which forms the shaft end receiving portion 221 of the feed chassis 220. Next, the bearing fixing bolts 22, 22 are inserted into the holes formed in the annular portion 25 of the stator core 23, the insertion holes 212, 212 of the slide bearing 21, and then bolt holes formed in the feed chassis 220. Then, by fastening the bearing fixing bolts 22 with nuts (not shown in the drawings), the stator 2 is fixed with respect to the feed chassis 220.

Next, the rotation shaft 41 of the rotor 4 is inserted through the insertion hole 211 of the slide bearing 21 of the stator 2, and the shaft tip portion 411 of the rotation shaft 41 is inserted in the brace 81. Further, when the shaft tip portion 411 of the rotation shaft 41 is pushed in, the brace 81 undergoes elastic deformation in that direction, and when further pushing is carried out to completely insert the shaft tip portion 411, the brace 81 is restored by an elastic force to engage with the shaft groove 412. In this way, the motor 1 is mounted to the feed chassis 220.

In this kind of mounting structure for mounting a motor to a mounting base according to the present invention, because the mounting base is equipped with the shaft end receiving portion 221 which supports one end (the bottom end in the example shown in Fig. 1) of the rotation shaft 41, there is no need to provide the stator 2 with a separate part for supporting one end of the rotation shaft 41, and this makes it possible to reduce the number of components or parts forming the structure for mounting the motor 1 to the mounting base.

Further, because there is no need to provide the stator 2 with a separate part for supporting one end of the rotation shaft 41, the structure of the stator 2 is simplified, and this makes it possible to reduce the manufacturing cost of the motor 1.

Further, after the stator 2 is mounted to the mounting base (220), by mounting the rotor 4, the shaft tip portion 411 of the shaft portion 41 is positioned in the depression (concave portion / that is, the shaft end receiving portion 221) integrally formed on the mounting base, and this makes it possible to mount the motor 1 to the mounting base with the simple operation of only mounting the stator and the rotor to the mounting base. Namely, the operation of mounting the motor 1 to the mounting base can be carried out easily.

Further, because the mounting base is formed from a metal material, it has a certain weight, and for this reason, stability is increased. This makes it possible to reduce vibrations due to eccentric rotation of the disc rotated by the motor mounted on the mounting base.

Further, because the shaft end receiving portion 221 is integrally formed on the mounting base, the processing steps for manufacturing the mounting base are reduced to a minimum, and this makes it possible to easily manufacture the mounting base. Further, it is possible to prevent the number of components from increasing.

Further, because the structure of the stator 2 is simplified and the number of components is reduced, it becomes possible to design a motor which is compact and light-weight.

Furthermore, in the embodiment described above, the shaft end receiving portion 221 is formed by a drawing process, but the shaft end receiving portion 221 may also be formed by other processing methods.

Furthermore, in the embodiment described above, a description was given for the example in which the feed chassis 220 of a disc drive is used as the mounting base for mounting the motor 1, but it is also possible to use another member instead of the feed chassis so long as such member can be used as a mounting base for mounting the motor 1.

Further, in the embodiment described above, the mounting base is constructed from a metal material, but it is also possible to construct the mounting base from another material such as wood or plastic or the like instead of metal.

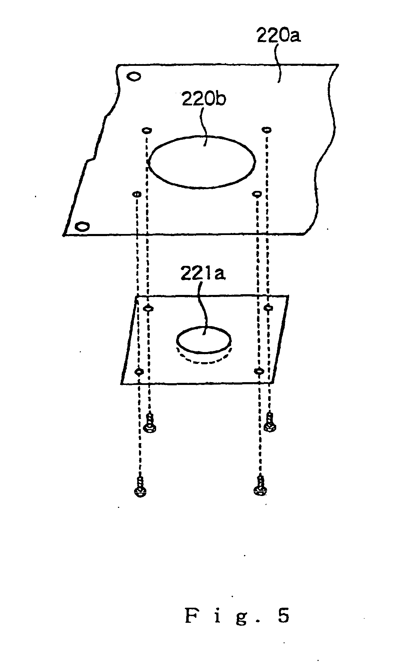

Further, in the embodiment described above, the shaft end receiving portion 221 was integrally formed on the mounting base, but the shaft end receiving portion 221 may be formed from a separate part. Fig. 5 is a perspective view which shows a second embodiment having such a structure. Namely, as shown in Fig. 5, for example, a shaft end receiving portion 221a may be manufactured from a separate metal plate member in which a depression is formed by a drawing process. By arranging such a shaft end receiving plate 221a to cover an opening 220b formed in the feed chassis 220a as a mounting base, and then fixing the thus formed shaft end receiving plate 221a to the feed chassis 220a with bolts and nuts, it is possible to form a mounting base provided with the shaft end receiving portion 221a. When constructed in this way. it may be applied to a mounting base (e.g., a feed chassis 220a) of the prior art structure as shown in Fig. 6. Namely, by attaching the shaft end receiving portion 221a to the feed chassis 220a of the prior art structure, it is possible to use the mounting base of the prior art to achieve the mounting structure for mounting a motor to a mounting base according to the present invention.

Further, in the embodiment described above, the mounting structure for mounting the motor 1 to the mounting base was shown for the example application to a recording/playback apparatus or playback apparatus (that is, an optical disc drive) which uses an optical recording medium such as an optical disc or the like. However, it is also possible to apply the mounting structure of the present invention to other information recording/playback apparatuses which use different recording mediums such as a magnetic recording medium, a magneto-optical recording medium or the like, if such apparatuses have a structure for mounting a spindle motor to a mounting base.

Further, in the embodiments described above, the example of the disc drive equipped with the mounting structure for mounting the motor 1 to the mounting base was shown as the type in which the disc is held in the horizontal direction, but it is also possible to apply the mounting structure of the present invention to a disc drive of the type that holds a disc in the vertical direction.

Of course, the present invention is not limited to the embodiments described above.

As described above, in the mounting structure for mounting a motor to a mounting base according to the present invention, there is no need to provide the stator with a structure for supporting one end of the rotation shaft, and this makes it possible to reduce the number of components forming the motor.

Further, in the case where the shaft end receiving portion which supports one end of the rotation shaft of the rotor portion is integrally formed on the mounting base, the processing steps for manufacturing the mounting base are reduced to a minimum, and this makes it possible to easily manufacture the mounting base equipped with the shaft end receiving portion.

Further, in the case where the mounting base is formed from a metal material, it is possible to reduce vibrations due to eccentric rotation of the disc rotated by the mounted motor.

Further, in the case of the structure where the shaft end receiving portion is formed by a drawing process, it is possible to easily form the shaft end receiving portion which supports one end of the rotation shaft.

Further, in the case where the mounting structure of the present invention is applied to a structure in which a feed chassis is used as a mounting base for a motor, it is possible to reduce the number of components forming the motor.

Finally, it is needless to mention that the present invention is not limited to the above-described embodiments but can be modified or improved in various ways within the scope described in claims.

## Claims

1. A mounting structure of a spindle motor to a mounting base, comprising:
a spindle motor (1) which includes a rotor (4) having a rotation shaft (41) for rotating a disc-shaped recording medium (100) and a stator (2) having a bearing (21) for rotatably supporting the rotation shaft (41), the bearing (21) having an insertion hole (211) through which the rotation shaft (41) is inserted; and
a mounting base (220) on which the spindle motor (1) is mounted, the mounting base (220) provided with a shaft end receiving portion (221) for restricting the downward movement of the rotation shaft (41),
the mounting structure being **characterized in that**
the shaft end receiving portion (221) is a concave portion which is integrally formed with the mounting base (220), and the concave portion (221) is provided below the bearing (21) for receiving a lower end of the rotation shaft (41) which is inserted through and protrudes from the insertion hole(211) of the bearing(21).

2. The mounting structure as claimed in claim 1, wherein the disc-shaped recording medium (100) is an optical disc, and the mounting base (220) is a chassis (220) provided in an optical disc drive (50) at least for reproducing the optical disc (100), wherein an optical pick-up (250) and the spindle motor (1) are provided on the chassis (220).

3. The mounting structure as claimed in claim 2, wherein the chassis (200) is formed from a metal plate and the shaft end receiving portion (221) is formed on the metal plate by means of drawing.

## Patentansprüche

1. Bauteil zur Befestigung eines Spindelmotors an einer Montagebasis, aufweisend:
einen Spindelmotor (1), welcher einen Rotor (4) umfasst, der eine Drehwelle (41) zum Drehen eines plattenförmigen Aufzeichnungsmediums (100) aufweist, und einen Stator (2) der ein Lager (21) zum drehbaren Tragen der Drehwelle (41) aufweist, wobei das Lager (21) ein Einführloch (211) aufweist, durch welches die Drehwelle (41) eingeführt wird; und
eine Montagebasis (220), auf welcher der Spindelmotor (1) angebracht ist, wobei die Montagebasis (220) mit einer Welle und einem Aufnahmeabschnitt (221) zum Beschränken der Abwärtsbewegung der Drehwelle (41) versehen ist,
wobei die Montagestruktur **dadurch gekennzeichnet ist, dass** der Schaftendeaufnahmeabschnitt (221) ein konkaver Abschnitt ist, welcher integral mit der Montagebasis (220) gebildet ist, und dass der konkave Abschnitt (221) unter dem Lager (21) zum Aufnehmen eines unteren Endes der Drehwelle (41) vorgesehen ist, die durch das Einführloch (211) des Lagers (21) eingeführt ist und aus diesem vorsteht.

2. Befestigungsstruktur nach Anspruch 1, wobei das plattenförmige Aufzeichnungsmedium (100) eine optische Platte ist, und wobei die Montagebasis (220) ein Chassis (220) ist, welches in einem optischem Plattenantrieb (50) zumindest zum Wiedergeben der optischen Platte (100) vorgesehen ist, wobei ein optischer Abtaster (250) und der Spindelmotor (1) auf dem Chassis (220) vorgesehen sind.

3. Vorrichtung nach Anspruch 2, wobei das Chassis (200) aus einer Metallplatte gebildet ist, und wobei der Wellenendeaufnahmeabschnitt (221) auf der Metallplatte mittels Ziehen gebildet ist.

## Revendications

1. Structure de montage d'un moteur à axe sur une embase, comprenant :
un moteur à axe (1) qui comprend un rotor (4) ayant un arbre de rotation (41) pour faire tourner un support d'enregistrement en forme de disque (100) et un stator (2) ayant un palier (21) pour supporter de manière rotative l'arbre de rotation (41), le palier (21) ayant un trou d'insertion (211) à travers lequel l'arbre de rotation (41) est inséré ; et
une embase (220) sur laquelle le moteur à axe (1) est monté, l'embase (220) étant pourvue d'une portion de réception d'extrémité d'arbre (221) pour limiter le mouvement descendant de l'arbre de rotation (41),
la structure de montage étant **caractérisé en ce que** :
la portion de réception d'extrémité d'arbre (221) est une portion concave qui est intégralement formée avec l'embase (220), et la portion concave (221) est disposée sous le palier (21) pour recevoir une extrémité inférieure de l'arbre de rotation (41) qui est inséré à travers et qui fait saillie du trou d'insertion (211) du palier (21).

2. Structure de montage telle que revendiquée dans la revendication 1, dans laquelle le support d'enregistrement en forme de disque (100) est un disque optique et l'embase est (220) est un châssis (220) disposé dans une unité de disque optique (50) au moins pour reproduire le disque optique (100), où un capteur optique (250) et le moteur à axe (1) sont placés sur le châssis (220).

3. Structure de montage telle que revendiquée dans la revendication 2, dans laquelle le châssis (200) est formé d'une plaque de métal et la portion de réception d'extrémité d'arbre (221) est formée sur la plaque de métal par emboutissage.
